# EUROPEAN PATENT SPECIFICATION

(11) **EP 3 653 870 B1**
(45) Date of publication and mention of the grant of the patent: **30.06.2021**
(21) Application number: 18205946.9
(22) Date of filing: 13.11.2018
(51) Int. Cl.: F03D 1/06

(54) **PITCH BEARING ARRANGEMENT**
BLATTLAGERANORDNUNG
AGENCEMENT DE PALIER DE PAS

(43) Date of publication of application: 20.05.2020
(73) Proprietor: Siemens Gamesa Renewable Energy A/S, 7330 Brande (DK)
(72) Inventor: Buch-Lorentsen, Karsten, 8680 Ry (DK); Hansen, Klaus Hjorth, 7300 Jelling (DK)
(74) Representative: Aspacher, Karl-Georg

(56) References cited:
- EP-A1- 2 643 585
- DE-U1-202010 009 462
- US-A1- 2009 311 104

## Description

The invention relates to a pitch bearing arrangement of a wind turbine, comprising an outer bearing ring and an inner bearing ring arranged coaxially to each other and comprising a common symmetry axis, and at least one reinforcement plate arranged at the inner ring.

Large industrial type horizontal axis wind turbines typically comprise a pitch regulation for controlling the orientation of the respective rotor blades with regard to the incoming air flow of the wind. In comparison to a stall regulated wind turbine, where the rotor blades a rigidly fixed to the hub of the wind turbine, the pitch regulated rotor blades are pivotable mounted to the hub. This allows to choose the orientation of the rotor blades with regard to the incoming air flow such that the amount of generated electricity by the wind turbine is optimized. Typically, the rotor blades are mounted to the hub by means of a bearing comprising an inner bearing ring and an outer bearing ring coaxially arranged to each other with rolling elements sandwiched between the two rings, for example tapered rollers or ball bearing arrangements. As wind turbines become larger and larger and consequently the rotor blades size increases, the forces which are transferred from the respective rotor blade to the hub via the pitch bearing increase as well. In order to reinforce the pitch bearing a reinforcement plate is arranged at the inner bearing as disclosed e.g. in EP 2 643 585 B1, or in an alternative a pair of reinforcement plates is arranged at the inner bearing ring as disclosed in EP 2 045 464 A2 or EP 2 933 476 A1. Such reinforcement plate(s) improve the stiffness of the bearing.

Usually the rotor blade is connected to the inner ring of the bearing, while the hub is connected to the outer bearing ring. For pitching the rotor blade the pitch drive and the respective mechanic components like pitch cylinders, pitch gear etc. are arranged in the hub. For allowing the maintenance personal to access the hub for maintenance purpose the reinforcement plate comprises a manhole, whereas if two reinforcement plates are present, as disclosed in EP 2 933 476 A1, such an arrangement comprises two manholes, through which the maintenance personal can access the blade via the hub. Maintenance of the major component is therefore possible directly in the hub and manholes in the reinforcement plates do not need to be bigger due to pitch component exchange. In an arrangement where the blade is connected to the outer ring and the hub is connected to the inner ring the pitch components are either placed inside the blade or on the outside of the hub. In both places the service and exchange of components is difficult as there is no easy access through a manhole from the hub.

The object of the invention is to provide an improved pitch bearing arrangement.

To achieve this object a pitch bearing arrangement is provided, characterized by at least one plate-like or beam-like stiffening means coupled to the outer ring axially adjacent to the at least one reinforcement plate and adapted to be coupled to a positioning means to be arranged at the other side of the at least one reinforcement plate used for pivoting the outer ring relative to the inner ring, with the at least one reinforcement plate comprising at least one hole through which the stiffening means is mechanically connectable or connected to the positioning means. In this embodiment only one reinforcement plate with at least one hole is provided.

In a similar approach to the embodiment with only one reinforcement plate two or more reinforcement plates are provided, with the at least one stiffening means being provided adjacent to one of the reinforcement plates and the positioning means being provided adjacent to another of the reinforcement plates, with the two or more reinforcement plates comprising axially corresponding holes through which the stiffening means is mechanically connectable or connected to the positioning means. In this embodiment the at least one plate-like or beam-like stiffening member therefore is coupled to the outer ring axially adjacent to one of the reinforcement plates and adapted to be coupled to a positioning means to be arranged adjacent to the other or, in case of e.g. three or more reinforcement plates, the outermost reinforcement plate, with the reinforcement plates comprising at least two axially corresponding holes through which the stiffening means is mechanically connectable or connected to the positioning means.

The inventive pitch bearing arrangement allows the installation of the central mechanical drive components for pitching the rotor blade in the hub, although the blade may be connected to the outer ring and the hub to the inner ring. This is possible, as the inventive pitch bearing arrangement is designed to have a mechanical connection from the inner of the hub to the inner of the blade through one or more respective connection holes provided in the one or the more reinforcement plates. The pitch bearing arrangement comprises at least one plate- or beam-like stiffening member, which is arranged at or at least mechanically coupled to the outer ring. This stiffening mean is the mechanical connection basis for coupling the outer ring to the pitch drive arranged on the other side of the reinforcement plate arrangement in the hub. In the hub the respective drive components like pitch cylinder, pitch gear etc. are arranged. This drive components are mechanically connected to the stiffening means and thus to the outer ring through a respective connection arrangement extending through the corresponding hole(s) in the reinforcement plate(s).

As the relevant drive components in the inventive pitch bearing arrangement may now be arranged in the hub, maintenance is eased, as the maintenance personal can access these components directly in the hub, there is no need to access the blade. No large manhole(s) need(s) to be provided in the reinforcement plate(s), but only small, adapted holes for allowing the mechanical connection to the drive components in the hub. However, access ways to the blade may nevertheless also be provided in case maintenance is required in the interior of the blades.

For connecting the stiffening means to the positioning means, a mechanical connection means is preferably provided. This mechanical connection means couples the stiffening means to the positioning means, for example the pitch cylinder or the like. Regarding the mechanical connection means several various embodiments are possible.

According to a first embodiment, the mechanical connection means is accommodated in the one or the more holes. In this embodiment the stiffening means is flat, like a flat plate, a flat ring plate or one or more flat beams. They extend parallel to the adjacent reinforcement plate. For connecting the drive means arranged in the hub to this flat stiffening means an elongated mechanical connection means like a respective rod or the like is with one end connected to the stiffening means and with the other end to the drive means and extends through the one or the more holes of the reinforcement plate(s). The mechanical connection means is for example firmly attached to the stiffening means but pivotably attached to the drive means, for example the pitch cylinder, which pitch cylinder is attached with the other end to a respective holding means arranged at the hub.

The one or the two or more axially corresponding holes are arranged eccentrical to the common axis, so that, when the pitch cylinder is activated and the plunger for example is pushed out of the cylinder, the respective longitudinal movement is transferred to the stiffening means resulting in a rotational movement of the outer ring and thus the blade.

In one embodiment the one or each of the reinforcement plates comprise two single holes (in case one reinforcement plate is provided) or two pairs of holes (in case two reinforcement plates are provided) arranged equally or unequally distributed around the common axis for accommodating two connection means. In this embodiment two separate drive means are arranged in the hub, which are separately connected by separate mechanical connection means to for example a common stiffening means. For this mechanical connection two pairs of respective axially corresponding holes, through which the mechanical connection means extend, are provided in the reinforcement plates. Thus a 180° arrangement is realized. Usually both drive means are activated synchronously, so that the rotational force is transferred to the stiffening means and thus the outer ring in a symmetrical way.

Each single hole or each hole of the one or the two pairs is in one embodiment kidney-shaped and should be as small as possible, as it is only used as a through hole for accommodating the mechanical connection means. Due to the kidney-form it follows the rotational movement performed by the mechanical connection mean due to the rotation of the stiffening member. The hole may however also resemble other shapes, e.g. circular, oval, triangular, rectangular or any other multisided shape, as long as the connection members can move freely.

In an alternative embodiment comprising two reinforcement plates both reinforcement plates are ring-shaped and comprise axially corresponding center holes for accommodating the connection means. In this embodiment the corresponding holes are not eccentric but are center holes right in the middle of the respective plates. Nevertheless, also in this embodiment the connection means is arranged eccentrical to the common axis, as the longitudinal movement of the drive means, i.e. a pitch cylinder needs to be transferred into a rotational movement.

Preferably also in this embodiment two separate connection means are arranged eccentrical and equally or unequally distributed around the common axis, with each connection means being connected to a separate drive means for allowing also in this embodiment to symmetrically drive the outer ring respectively the hub. In an alternative to the eccentric arrangement a centric carrier, like a tube or a rod or a block, with a gear ring connected or connectable to the positioning means may be provided.

As already explained, in the above-mentioned embodiments the reinforcement plates are preferably parallel to each other, with the stiffening means being preferably parallel to the adjacent reinforcement plate. In an alternative the reinforcement plates may also be angled to each other.

The previously disclosed embodiment comprises separate mechanical connection means extending through the hole or the holes provided in the reinforcement plate(s). In another embodiment of the invention comprising two or more reinforcement plates the reinforcement plates are ring-shaped and comprise axially corresponding center holes for accommodating a section of the stiffening means extending into or through the holes. In this embodiment the stiffening means is not flat but has a specific geometry providing a section which runs into or through the respective holes of the reinforcement plates. Thus, the attachment plane for attaching a connection means for connecting the stiffening means, which connection means are attached to the section bottom arranged in or below the holes, is moved to the side of the hub, where the drive components are arranged. Therefore, no elongated connection means are necessary, but only small, short connection means allowing to mechanically connect the drive means, for example the pitch cylinder, to the stiffening means section.

The section itself is, at least in part, provided with a single wall structure, alternatively also a double wall structure may be provided.

In this embodiment the reinforcement plate adjacent to the stiffening mean may either have a cone form, while also the stiffening mean has a corresponding cone form. The two reinforcement plates are therefore not parallel to each other. The one reinforcement plate close to the hub is flat, while the second reinforcement plate close to the blade has the cone form. The stiffening means, either in form of a cone plate or a respectively bent beam or the like, has a corresponding form, so that it is nearly parallel to the cone reinforcement plate, so that the respective section extends into or through the center holes of the reinforcement plates.

In an alternative embodiment the reinforcement plate adjacent to the stiffening means has a flat form and the stiffening means has a trough-like form. In this embodiment, both reinforcement plates are parallel, also the stiffening means for example realized as a trough- or pot-like plate has a ring-shaped outer contour, which is parallel to the adjacent reinforcement plate, while the trough- or pot-like center extends or preferably slightly through both reinforcement plate holes.

In any way the respective attachment plane of the section is arranged in the hole arrangement of the reinforcement plates or extends through the holes and thus lies completely below the lower reinforcement plate in the hub section.

In any case, the respective forms of the reinforcement plates and the stiffening means are not restricted to the above-mentioned geometric forms of the various embodiments. Also, other forms or arrangements of the plate(s) and the one or more stiffening means are possible, as long as they fulfil the respective purpose.

Aside the pitch bearing arrangement the invention relates to a wind turbine, comprising a hub, at least one rotor blade and at least one pitch bearing arrangement as disclosed above, wherein the pitch bearing arrangement pivotably connects the rotor blade to the hub.

In a further embodiment the inventive wind turbine is characterized in that the rotor blade is attached to the outer ring and the hub to the inner ring, while that the positioning means is or are arranged inside the hub.

The hub as referred to herein can be a segmented hub comprised of two or more separate parts e.g. for ease of casting and transportation, which are assembled to make up a full hub. Likewise, the hub as referred to herein may comprise so called hub extenders already known in the art, which are essentially cylindrical hollow bodies extending from and attached to the hub and in turn the rotor blade root attached to the extender as with regular hubs. The extender may also be referred to as a root extender. The rotor blade bearing may be attached in-between the hub and an extender but preferably placed in-between the extender and the rotor blade. In any case the pitch system as herein described is applicable to any given hub configuration i.e. a standard hub or a hub being segmented and/or comprising extenders.

Embodiments of the invention are now described, by a way of example only, with reference to the accompanying drawings, in which:
- Fig. 1: shows a wind turbine with pitch regulated wind turbine rotor blades,
- Fig. 2: show a perspective view of a pitch bearing arrangement according to a first embodiment,
- Fig. 3: shows a perspective cut view of the arrangement of Fig. 2,
- Fig. 4: shows a cut view of a pitch bearing arrangement of a second embodiment,
- Fig. 5: shows a perspective cut view of the second embodiment and
- Fig. 6: shows a cut view of a third embodiment of an inventive pitch bearing arrangement.

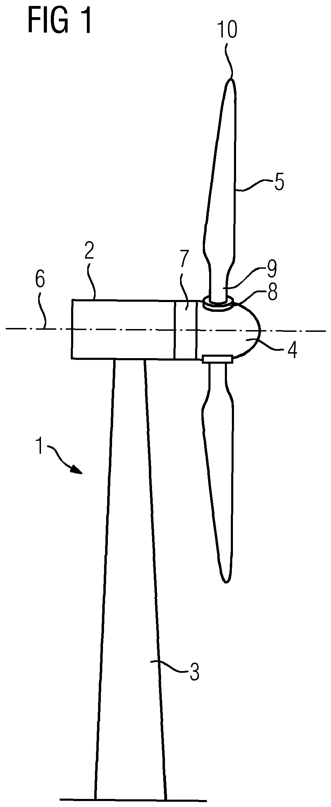

In Fig. 1 a wind turbine 1 is shown. The wind turbine 1 comprises a nacelle 2 and a tower 3. The nacelle 2 is mounted at the top of the tower 3. The nacelle 2 is mounted rotatable with regard to the tower 3 by means of a jaw bearing. The axis of rotation of a nacelle 2 with regard to the tower 3 is referred to as the jaw axis.

The wind turbine 1 furthermore comprises a hub 4 with one or more rotor blades 5, preferably three rotor blades 5. The hub 4 is mounted rotatable relative to the nacelle 2 by means of a main bearing. The hub 4 is mounted rotatable about a rotor axis of rotation 6.

The wind turbine 1 furthermore comprises a main shaft connecting the hub 4 with a rotor of a generator 7. If the hub 4 is connected directly to the rotor, the wind turbine is referred to as a gearless, direct drive wind turbine. Alternatively, the hub 4 may also be connected to the rotor via a gear box. This type of wind turbine is commonly referred to as a geared wind turbine.

The generator 7 is accommodated within the nacelle 2. It comprises a rotor and a stator and, as known, converts the rotational energy from the rotor into electrical energy.

In the example shown in Fig. 1 the wind turbine 1 comprises, as said, three rotor blades 5, two of which are shown in Fig. 1. The rotor blades 5 are mounted rotatable with regard to the hub 4 by means of respective pitch bearing arrangements 8. The rotor blades 5 may thus be pitched in order to optimize their orientation with regard to the wind flow impinging on the wind turbine 1.

Each rotor blade 5 comprises a root section 9 and a tip section 10. The root section refers to the part of the rotor blade 5 which is closest to the hub 4 and pitch bearing arrangement 8. The common set up of such a wind turbine with pitchable blades is known.

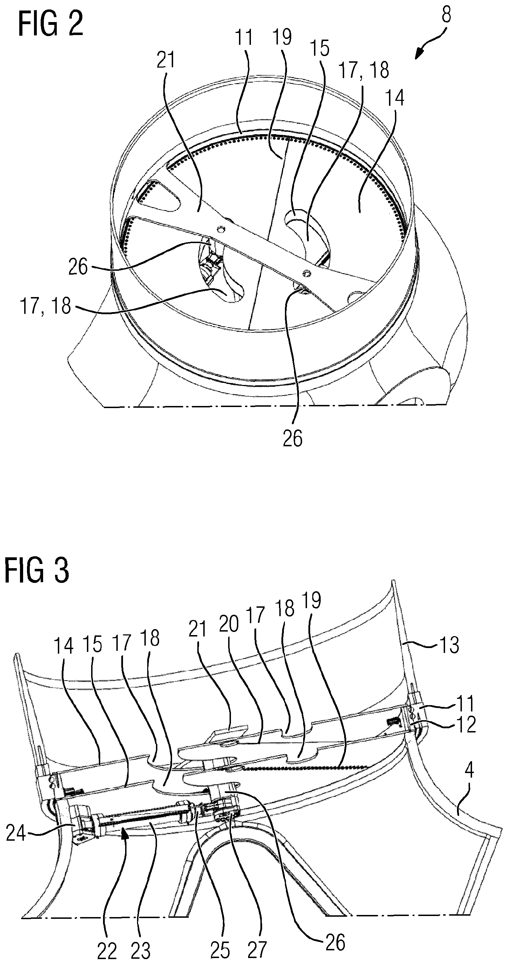

Fig. 2 shows a first embodiment of an inventive pitch bearing arrangement 8. It comprises, see also Fig. 3, an outer bearing ring 11 and an inner bearing ring 12 with bearing elements, for example tapered rollers or balls, being arranged between the rings 11, 12. The inner ring 12 is connected to the hub 4, while the outer ring 11 is connected to a root element 13 which is part of the blade 5.

The pitch bearing arrangement 8 further comprises two reinforcement plates 14, 15 which are attached to the upper and lower end of the inner ring 11. The reinforcement plates 14, 15 are flat plates closing the inner of the inner bearing ring 12, see Fig. 2. Each reinforcement plate 14, 15 comprises two eccentrical arranged kidney-shaped holes 17, 18, which are axially aligned with each other forming two axially corresponding hole pairs as clearly shown in Figs. 2, 3. As shown in the figures, the reinforcement plates 14, 15 may be realized by two plate halfs, which are connected to each other in the middle, see the respective seams 19, 20. Each plate half comprises a respective hole 17, 18.

The inventive pitch bearing arrangement 8 further comprises a stiffening element 21 here in form of a flat beam, which is adjacent and parallel to the outer reinforcement plate 14 and in relative close distance to the plate 14. This stiffening means 21 is attached to the outer ring 11.

As Fig. 3 shows a positioning means 22 here comprising a pitch cylinder 23 is arranged within the hub 4. By means of a fixation element 24 it is attached to inner circumference of the hub 4 close to the lower reinforcement plate 15. The piston 25 which can be pushed out of the pitch cylinder 23 is connected to a mechanical connection means 26 via a pivot connection 27. The other end of this mechanical connection means 26 is firmly attached to the bottom side of the stiffening means 21, i.e. the flat elongated beam and extends through the corresponding holes 17, 18. In Fig. 3 only one positioning means 22 and one mechanical connection means 26 are shown. It is to be noted, that there is certainly a second positioning means 22 and a second mechanical connection means 26 arranged at the opposite side of the hub respectively in the other pair of eccentric holes 17, 18. Both mechanical connection means 26 are shown in Fig. 2.

The positioning means 22 are adapted to pivot the outer ring 11 relative to the inner ring 12 and thus to pitch the blade 5 relative to the hub. When the pistons 25 of both positioning means 22 are pushed out of the cylinder housing this linear movement is transferred to the connection means 26. Due to the pivot connection 27 the connection means 26 rotates relative to the positioning means and moves in the holes 17, 18 allowing the outer ring 11 to be rotated. Thus, simply by pushing the pistons 25 out or retracting them in the cylinder housing the outer ring 11 and thus the blade 5 can be pitched relative to the hub 4.

As it is obvious from Fig. 3 the positioning means and the connection means 26 are arranged in the hub and thus are accessible through the hub for maintenance purpose. There is in principle no need for the maintenance personal to enter the blade, as no relevant mechanical component is arranged in the blade but only in the hub.

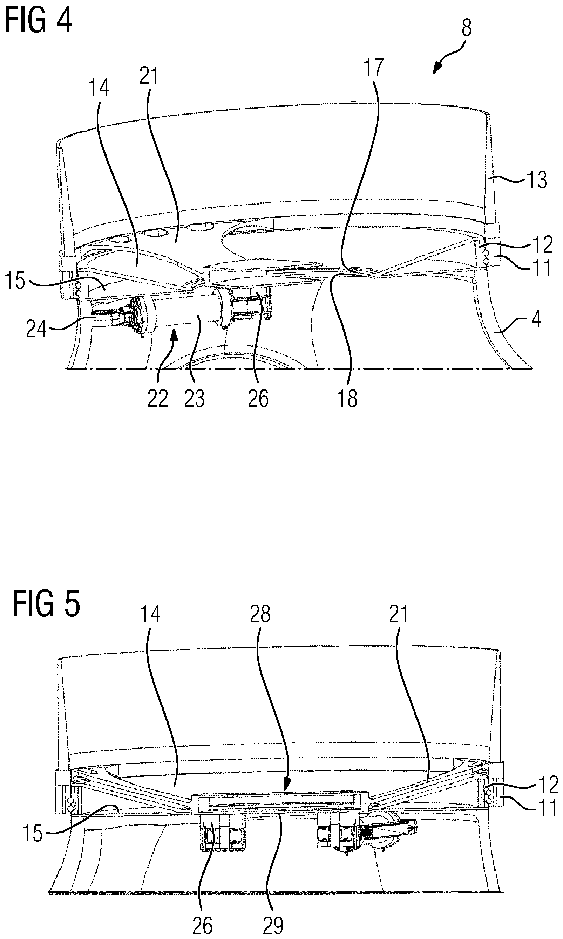

Figs. 4 and 5 show a second embodiment of an inventive pitch bearing arrangement 8. Again the hub 4 and a root element 13 are shown which are connected to each other via the pitch bearing arrangement 8 comprising the outer ring 11 attached to the root element 13 and the inner ring 12 attached to the hub 4. The inner ring 12 again is reinforced by two reinforcement plates 14, 15. Both reinforcement plates 14, 15 are designed as ring plates comprising two center holes 17, 18. While the lower reinforcement plate 15 is a flat ring plate, the upper reinforcement plate 14 is a cone-shaped ring plate which is connected with its inner circumference to the inner circumference of the lower reinforcement plate 15 as shown in Figs. 4 and 5.

Also in this embodiment a stiffening means 21 is coupled to the outer ring 11. The stiffening means 21 has a bent form corresponding to the form of the cone-shaped upper reinforcement plate 14, see especially Fig. 5. Its center section 28 is in this embodiment double-layered and extends into the two plate holes 17, 18, so that the bottom 29 of this center section 28 corresponds to the plane in which the lower hole 18 is situated or extends even below this plane.

A mechanical connection means 26 is eccentrically attached to the bottom side 29 of the center section 28, to which connection means 26 the positioning means 22 respectively the pitch cylinder 23 is attached with its piston 25, while the cylinder housing is attached to the hub 4 by means of a fixation element 24. As the cut view of Fig. 5 shows, also in this embodiment two positioning means 22 and two respective eccentrical connection means 26 are provided, so that also in this embodiment the rotation of the outer ring 11 relative to the non-rotating inner ring 12 and thus the pitch of the blade 5 relative to the hub 4 can be realized by symmetrical rotation force.

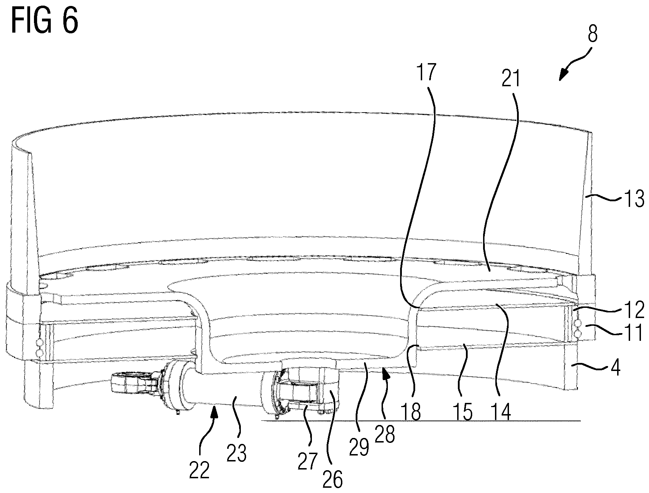

Finally, Fig. 6 shows a third embodiment of an inventive pitch bearing arrangement 8 comprising an outer ring 11, an inner ring 12 attached to the blade route element 13 respectively the hub 4. The inner ring 11 is reinforced by means of reinforcement plates 14, 15, which are parallel to each other and comprise two respective center holes 17, 18 which are axially aligned.

The pitch bearing arrangement 8 further comprises a stiffening means 21 here in form of a trough-like or pot-like shaped plate which is attached to or coupled to the outer ring 11. The stiffening means 21 comprises a trough-like or pot-like center section 28 extending through both holes 17, 18. To the bottom side 29 of this trough-like or pot-like center section 28 the mechanical connection means 26 is attached, to which via a pivot connection 27 the piston of the positioning means 22, also here in form of a pitch cylinder 23 is attached. The other end of the positioning means 22 is again attached to the hub 4 via a not shown fixation element 24.

The position at the bottom side 29, to which the mechanical connection means 26 is attached, is eccentrical to the center axis to assure that the longitudinal movement of the piston is transferred to a rotational movement of the stiffening means 21 and thus the outer ring 11.

It is to be noted, that also in this embodiment a second positioning means 22 and a second mechanical connection means 26 is provided, which are arranged at a 180° position, thus also being attached eccentrical to the bottom side 29 for having a symmetrical force transfer on the stiffening means 21.

While the embodiments show two reinforcement plates, it is also possible to provide only one reinforcement plate and to connect the stiffening means through this one plate via a hole to the positioning means provided at the other plate side, with any of the connections being usable as shown in the pictures.

## Claims

1. Pitch bearing arrangement of a wind turbine (1), comprising an outer bearing ring (11) to be connected to a blade (5) and an inner bearing ring (12) to be connected to a hub (4) arranged coaxially to each other and comprising a common symmetry axis, and at least one reinforcement plate (14, 15) arranged at the inner ring (12) and at least one plate-like or beam-like stiffening means (21) coupled to the outer ring (11) axially adjacent to the at least one reinforcement plate (14) and adapted to be coupled to a positioning means (22) to be arranged at the other side of the at least one reinforcement plate (15) relative to the stiffening means (21) used for pivoting the outer ring (11) relative to the inner ring (12),
**characterized in that** the at least one reinforcement plate (14, 15) comprises at least one hole (17, 18) through which the stiffening means (21) is mechanically connectable or connected to the positioning means (22).

2. Pitch bearing arrangement according to claim 1,
**characterized in that** two or more reinforcement plates (14,15) are provided, with the stiffening means being provided adjacent to one of the reinforcement plates (14) and the positioning means being provided adjacent to another of the reinforcement plates, with the reinforcement plates (14, 15) comprising axially corresponding holes (17, 18) through which the stiffening means (21) is mechanically connectable or connected to the positioning means (22).

3. Pitch bearing arrangement according to claim 1 or 2,
**characterized in that** a mechanic connection means (26) for connecting the stiffening means (21) to the positioning means (22) is provided.

4. Pitch bearing arrangement according to claim 3,
**characterized in that** the mechanic connection means (26) is accommodated in the hole or the holes (17, 18).

5. Pitch bearing arrangement according to claim 4,
**characterized in that** the hole or the corresponding holes (17, 18) are arranged eccentrical to the common axis.

6. Pitch bearing arrangement according to claim 5,
**characterized in that** the one or the more reinforcement plates (14, 15) comprise two or more pairs of holes (17, 18) arranged equally or unequally distributed around the common axis for accommodating two connection means (26).

7. Pitch bearing arrangement according to claim 5 or 6,
**characterized in that** the or each hole (17, 18) is kidney-shaped, circular, oval, triangular, rectangular or of any other multisided shape.

8. Pitch bearing arrangement according claim 4,
**characterized in that** both reinforcement plates (14, 15) are ring-shaped and comprise axially corresponding center holes (17, 18) for accommodating the connection means (26) .

9. Pitch bearing arrangement according to claim 8,
**characterized in that** the connection means (26) is arranged eccentrical to the common axis, or that a centric carrier with a gear ring connected or connectable to the positioning means is provided.

10. Pitch bearing according to claim 9, **characterized in that** two connection means (26) are arranged eccentrical and equally or unequally distributed around the common axis.

11. Pitch bearing arrangement according to claim 2 and one of the claims 3 to 10, **characterized in that** the reinforcement plates (14, 15) are parallel or angled to each other, with the stiffening means (21) being preferably parallel to the adjacent reinforcement plate (14) .

12. Pitch bearing arrangement according to one of the claims 1 to 4, **characterized in that** the one or the more reinforcement plates (14, 15) are ring-shaped and that the or each reinforcement plate comprises at least one center hole (17, 18) for accommodating a section (28) of the stiffening means (21) extending into or through the hole or the holes (17, 18).

13. Pitch bearing arrangement according to claim 12,
**characterized in that** the section (28) at least in part has a single or a double wall structure.

14. Pitch bearing arrangement according to claim 12 or 13, **characterized in that** the reinforcement plate (14) adjacent to the stiffening means (21) has a cone form and that the stiffening means (21) has a corresponding form, or that the reinforcement plate (14) adjacent to the stiffening means (21) has a flat form and the stiffening means (21) has a trough-like form.

15. Wind turbine, comprising a hub (4), at least one rotor blade (5) and at least on pitch bearing arrangement (8) according to one of the preceding claims, wherein the pitch bearing arrangement (8) pivotably connects the rotor blade (5) to the hub (4).

16. Wind turbine according to claim, **characterized in that** the rotor blade (5) is attached to the outer ring (11) and the hub (4) to the inner ring (12), and that the positioning means (22) is or are arranged inside the hub (4) .

## Patentansprüche

1. Blattlageranordnung einer Windenergieanlage (1), die einen mit einem Blatt (5) zu verbindenden Lageraußenring (11) und einen mit einer Nabe (4) zu verbindenden Lagerinnenring (12), die koaxial zueinander angeordnet sind und eine gemeinsame Symmetrieachse umfassen, und mindestens eine Verstärkungsplatte (14, 15), die an dem Innenring (12) angeordnet ist, und mindestens ein platten- oder balkenartiges Versteifungsmittel (21) umfasst, das axial an die mindestens eine Verstärkungsplatte (14) angrenzend an den Außenring (11) gekoppelt und so ausgelegt ist, dass es sich an ein Positioniermittel (22) koppeln lässt, das in Bezug auf das Versteifungsmittel (21) auf der anderen Seite der mindestens einen Verstärkungsplatte (15) angeordnet und zum Verschwenken des Außenrings (11) in Bezug auf den Innenring (12) verwendet werden soll,
**dadurch gekennzeichnet, dass** die mindestens eine Verstärkungsplatte (14, 15) mindestens ein Loch (17, 18) umfasst, durch das das Versteifungsmittel (21) mechanisch mit dem Positioniermittel (22) verbindbar oder verbunden ist.

2. Blattlageranordnung nach Anspruch 1,
**dadurch gekennzeichnet, dass** zwei oder mehr Verstärkungsplatten (14, 15) vorgesehen sind, wobei das Versteifungsmittel an eine der Verstärkungsplatten (14) angrenzend und das Positioniermittel an eine andere Verstärkungsplatte angrenzend vorgesehen ist, wobei die Verstärkungsplatten (14, 15) axial übereinstimmende Löcher (17, 18) umfassen, durch die das Versteifungsmittel (21) mechanisch mit dem Positioniermittel (22) verbindbar oder verbunden ist.

3. Blattlageranordnung nach Anspruch 1 oder 2,
**dadurch gekennzeichnet, dass** ein mechanisches Verbindungsmittel (26) zum Verbinden des Versteifungsmittels (21) mit dem Positioniermittel (22) vorgesehen ist.

4. Blattlageranordnung nach Anspruch 3,
**dadurch gekennzeichnet, dass** das mechanische Verbindungsmittel (26) in dem Loch oder den Löchern (17, 18) untergebracht ist.

5. Blattlageranordnung nach Anspruch 4,
**dadurch gekennzeichnet, dass** das Loch oder die übereinstimmenden Löcher (17, 18) exzentrisch zur gemeinsamen Achse angeordnet sind.

6. Blattlageranordnung nach Anspruch 5,
**dadurch gekennzeichnet, dass** die eine oder die mehreren Verstärkungsplatten (14, 15) zwei oder mehr Paare Löcher (17, 18) umfassen, die zum Aufnehmen von zwei Verbindungsmitteln (26) gleichmäßig oder ungleichmäßig um die gemeinsame Achse herum verteilt angeordnet sind.

7. Blattlageranordnung nach Anspruch 5 oder 6,
**dadurch gekennzeichnet, dass** das oder jedes Loch (17, 18) nierenförmig, rund, oval, dreieckig, rechteckig ist oder eine beliebige andere mehrseitige Form aufweist.

8. Blattlageranordnung nach Anspruch 4,
**dadurch gekennzeichnet, dass** beide Verstärkungsplatten (14, 15) ringförmig sind und axial übereinstimmende Zentrierlöcher (17, 18) zum Aufnehmen des Verbindungsmittels (26) umfassen.

9. Blattlageranordnung nach Anspruch 8,
**dadurch gekennzeichnet, dass** das Verbindungsmittel (26) exzentrisch zur gemeinsamen Achse angeordnet oder ein mit dem Positioniermittel verbundener oder verbindbarer mittiger Träger mit einem Zahnkranz vorgesehen ist.

10. Blattlager nach Anspruch 9,
**dadurch gekennzeichnet, dass** zwei Verbindungsmittel (26) exzentrisch und gleichmäßig oder ungleichmäßig um die gemeinsame Achse herum verteilt angeordnet sind.

11. Blattlageranordnung nach Anspruch 2 und einem der Ansprüche 3 bis 10,
**dadurch gekennzeichnet, dass** die Verstärkungsplatten (14, 15) parallel oder in einem Winkel zueinander angeordnet sind, wobei das Versteifungsmittel (21) vorzugsweise parallel zu der daran angrenzenden Verstärkungsplatte (14) angeordnet ist.

12. Blattlageranordnung nach einem der Ansprüche 1 bis 4,
**dadurch gekennzeichnet, dass** die eine oder die mehreren Verstärkungsplatten (14, 15) ringförmig sind und die eine oder jede Verstärkungsplatte mindestens ein Zentrierloch (17, 18) zum Aufnehmen eines Teils (28) des Versteifungsmittels (21) umfasst, der in das Loch oder die Löcher (17, 18) hinein oder durch diese/s hindurch verläuft.

13. Blattlageranordnung nach Anspruch 12,
**dadurch gekennzeichnet, dass** der Teil (28) zumindest teilweise eine Einzel- oder Doppelwandkonstruktion besitzt.

14. Blattlageranordnung nach Anspruch 12 oder 13,
**dadurch gekennzeichnet, dass** die an das Versteifungsmittel (21) angrenzende Verstärkungsplatte (14) eine Kegelform und das Versteifungsmittel (21) eine entsprechende Form aufweist oder die an das Versteifungsmittel (21) angrenzende Versteifungsplatte (14) eine flache Form und das Versteifungsmittel (21) eine wannenartige Form aufweist.

15. Windenergieanlage mit einer Nabe (4), mindestens einem Rotorblatt (5) und mindestens einer Blattlageranordnung (8) nach einem der vorhergehenden Ansprüche, wobei die Blattlageranordnung (8) das Rotorblatt (5) drehbar mit der Nabe (4) verbindet.

16. Windenergieanlage nach Anspruch 15,
**dadurch gekennzeichnet, dass** das Rotorblatt (5) an dem Außenring (11) und die Nabe (4) an dem Innenring (12) angebracht ist und das/die Positioniermittel (22) in der Nabe (4) angeordnet ist/sind.

## Revendications

1. Agencement de palier de pas d'une éolienne (1), comprenant une bague de palier externe (11) devant être reliée à une pale (5) et une bague de palier interne (12) devant être reliée à un moyeu (4) agencées de manière coaxiale l'une par rapport à l'autre et comprenant un axe de symétrie commun, et au moins une plaque de renforcement (14, 15) agencée au niveau de la bague interne (12) et au moins un moyen rigidifiant (21) de type plaque ou de type poutre couplé à la bague externe (11) adjacent de manière axiale à l'au moins une plaque de renforcement (14) et conçu pour être couplé à un moyen de positionnement (22) devant être agencé sur l'autre côté de l'au moins une plaque de renforcement (15) par rapport au moyen rigidifiant (21) utilisé pour faire pivoter la bague externe (11) par rapport à la bague interne (12),
**caractérisé en ce que** l'au moins une plaque de renforcement (14, 15) comprend au moins un trou (17, 18) à travers lequel le moyen rigidifiant (21) est mécaniquement relié ou apte à être relié au moyen de positionnement (22).

2. Agencement de palier de pas selon la revendication 1,
**caractérisé en ce que** deux plaques de renforcement (14, 15) ou plus sont ménagées, le moyen rigidifiant étant ménagé de manière adjacente à l'une des plaques de renforcement (14) et le moyen de positionnement étant ménagé de manière adjacente à une autre des plaques de renforcement, les plaques de renforcement (14, 15) comprenant des trous (17, 18) à correspondance axiale à travers lesquels le moyen rigidifiant (21) est mécaniquement relié ou apte à être relié au moyen de positionnement (22).

3. Agencement de palier de pas selon la revendication 1 ou 2,
**caractérisé en ce qu'**un moyen de liaison mécanique (26) pour relier le moyen rigidifiant (21) au moyen de positionnement (22) est ménagé.

4. Agencement de palier de pas selon la revendication 3,
**caractérisé en ce que** le moyen de liaison mécanique (26) est logé dans le trou ou les trous (17, 18).

5. Agencement de palier de pas selon la revendication 4,
**caractérisé en ce que** le trou ou les trous correspondants (17, 18) sont agencés de manière excentrée par rapport à l'axe commun.

6. Agencement de palier de pas selon la revendication 5,
**caractérisé en ce que** l'une plaque ou les plusieurs plaques de renforcement (14, 15) comprennent deux paires de trous (17, 18) ou plus agencées en étant réparties de manière régulière ou irrégulière autour de l'axe commun pour loger deux moyens de liaison (26).

7. Agencement de palier de pas selon la revendication 5 ou 6,
**caractérisé en ce que** le ou chaque trou (17, 18) est réniforme, circulaire, ovale, triangulaire, rectangulaire ou de toute autre forme à plusieurs côtés.

8. Agencement de palier de pas selon la revendication 4,
**caractérisé en ce que** les deux plaques de renforcement (14, 15) sont en forme de bague et comprennent des trous centraux (17, 18) à correspondance axiale pour loger le moyen de liaison (26).

9. Agencement de palier de pas selon la revendication 8,
**caractérisé en ce que** le moyen de liaison (26) est agencé de manière excentrée par rapport à l'axe commun, ou **en ce qu'**un support centré ayant une couronne reliée ou apte à être reliée au moyen de positionnement est ménagé.

10. Agencement de palier de pas selon la revendication 9,
**caractérisé en ce que** deux moyens de liaison (26) sont agencés de manière excentrée et répartis de manière régulière ou irrégulière autour de l'axe commun.

11. Agencement de palier de pas selon la revendication 2 et l'une des revendications 3 à 10, **caractérisé en ce que** les plaques de renforcement (14, 15) sont parallèles ou inclinées les unes par rapport aux autres, le moyen rigidifiant (21) étant de préférence parallèle à la plaque de renforcement adjacente (14).

12. Agencement de palier de pas selon l'une des revendications 1 à 4, **caractérisé en ce que** l'une plaque ou les plusieurs plaques de renforcement (14, 15) sont en forme de bague et **en ce que** la ou chaque plaque de renforcement comprend au moins un trou central (17, 18) pour loger une section (28) du moyen rigidifiant (21) s'étendant dans ou à travers le trou ou les trous (17, 18).

13. Agencement de palier de pas selon la revendication 12,
**caractérisé en ce que** la section (28) possède au moins en partie une structure à paroi simple ou double.

14. Agencement de palier de pas selon la revendication 12 ou 13, **caractérisé en ce que** la plaque de renforcement (14) adjacente au moyen rigidifiant (21) possède une forme de cône et **en ce que** le moyen rigidifiant (21) possède une forme correspondante, ou **en ce que** la plaque de renforcement (14) adjacente au moyen rigidifiant (21) possède une forme plate et le moyen rigidifiant (21) possède une forme de type cuvette.

15. Éolienne, comprenant un moyeu (4), au moins une pale de rotor (5) et au moins un agencement de palier de pas (8) selon l'une des revendications précédentes, dans lequel l'agencement de palier de pas (8) relie de manière pivotante la pale de rotor (5) au moyeu (4).

16. Éolienne selon la revendication 15, **caractérisée en ce que** la pale de rotor (5) est attachée à la bague externe (11) et le moyeu (4) à la bague interne (12), et **en ce que** le moyen ou les moyens de positionnement (22) est agencé ou sont agencés à l'intérieur du moyeu (4).
